# EUROPEAN PATENT APPLICATION

(11) **EP 4 410 894 A1**
(43) Date of publication of application: **07.08.2024**
(21) Application number: 22885673.8
(22) Date of filing: 12.10.2022
(51) Int. Cl.: C08L 69/00, C08L 67/02, C08L 23/08, C08L 33/12, C08K 3/22, C08K 3/36, C08K 3/16, C08K 3/04, A61J 1/00

(54) **POLYCARBONATE ALLOY MATERIAL, PREPARATION THEREFOR, AND APPLICATION THEREOF**

(30) Priority: 26.10.2021 CN 202111246802
(71) Applicant: Shanghai Kingfa Sci. & Tech. DVPT. Co., Ltd., Qingpu, Shanghai 201714 (CN); Jiangsu Kingfa Sci. & Tech. Advanced Materials Co., Ltd., Suzhou, Jiangsu 215300 (CN)
(72) Inventor: DONG, Xiangmao, Shanghai 201714 (CN); HUANG, Hesheng, Shanghai 201714 (CN); CHEN, Pingxu, Shanghai 201714 (CN); YE, Nanbiao, Shanghai 201714 (CN); AI, Junwei, Shanghai 201714 (CN); CEN, Yin, Shanghai 201714 (CN); ZHANG, Yong, Shanghai 201714 (CN)
(74) Representative: Canzler & Bergmeier Patentanwälte Partnerschaft mbB
(86) International application number: PCT/CN2022/124848
(87) International publication number: WO 2023/071794

(57) **Abstract**

A polycarbonate alloy material, comprising the following components in parts by weight: 40-70 parts of polycarbonate; 20-40 parts of polyethylene terephthalate; and 0.1-2 parts of a metal compound. The metal compound is selected from any one of a metal oxide, a metal base, or a metal salt, and the metal is selected from any one of copper, iron, magnesium, calcium, titanium, antimony, sodium, or potassium. A certain amount of polyethylene terephthalate and a specific metal compound are added to the polycarbonate, such that a prepared polycarbonate alloy material has excellent chemical resistance, also has high melt strength and low melt cooling rate, and is applicable to extrusion blow molding processing to prepare a thick-walled and large-scale packaging container product, such that novel options of materials and molding approaches are provided for the field of packaging, the use requirements of drug packaging containers can be particularly satisfied, and the application of a polycarbonate material is further broadened.

## Description

### TECHNICAL FIELD

The present invention relates to the technical field of engineering plastics, and specifically relates to a polycarbonate alloy material, a preparation method therefor and use thereof.

### BACKGROUND

Extrusion blow molding is the greatest category among the blow molding methods and used for the manufacture of hollow plastic workpieces. Its molding process is mainly as follows: a molten tubular preform is extruded by an extruding machine, and immediately placed into the middle of an open blowing die when the preform is hot, and then the die is closed to clamp the preform; compressed air is introduced in time to blow up the preform such that the preform clings to the inner wall of the die cavity for workpiece molding; the workpiece is cooled and solidified, and then the die is opened to take out the workpiece. The greatest category of blow molding products obtained via extrusion blow molding are packaging containers which are used to contain food, cosmetics, medicines or chemicals and other liquid or solid powder. In recent years, the blow molding process has been already applied to the aspects such as auto spare parts and household supplies more. At present, conventional plastics such as high-density polyethylene (HDPE) or polypropylene (PP) are used for most of the packaging container products formed via extrusion blow molding; but there are still problems, e.g., poor mechanical property.

The engineering plastics polycarbonate (PC) has excellent overall performance, higher mechanical strength and toughness, but has a poor chemical resistance. Moreover, the material has high process requirements during extrusion blow molding, which limits its application in extrusion blow-molding packaging containers (especially as a medicine packaging container). Currently, there are related technologies on the use of the PC material in extrusion blow molding. Chinese patent application CN106589778A discloses a high-molecular polymer suitable for blow molding; PC and acrylonitrile butadiene styrene (ABS) are blended to form an alloy to improve the material strength and toughness. Chinese patent application CN108164960A discloses a blow-molding PC/ABS composite material; a melt reinforcing agent, a styrene-acrylonitrile copolymer, is added to the material to improve the melt strength of the material and enhance the extrusion blow molding performance. However, the PC materials in the above prior art are mainly used for small-sized strutting pieces or car spoilers, and the chemical resistance of these PC materials is not improved; therefore, these PC materials in the prior art are not suitable for packaging containers, particularly in the aspect of medicine containing.

Therefore, the present invention is mainly to study a PC material suitable for extrusion blow molding and can meet the use requirement of medicine packaging containers, which is thus of significance in expanding the application of PC materials.

### SUMMARY

To overcome the shortcomings of the above prior art, the object of the present invention is to provide a polycarbonate alloy material. The polycarbonate alloy material of the present invention has an excellent chemical resistance, a high melt strength and a low melt cooling rate and thus, is suitable for the preparation of packaging containers via extrusion blow molding, for use in medicine packaging.

Another object of the present invention is to provide a preparation method of the above polycarbonate alloy material.

A further object of the present invention is to provide use of the above polycarbonate alloy material.

The present invention is achieved by the following technical solution:
a polycarbonate alloy material, including the following components in parts by weight:
   40-70 parts of polycarbonate;
   20-40 parts of polyethylene terephthalate (PET); and
   0.1-2 parts of a metallic compound;
the metallic compound is selected from any one or more of a metal oxide, a metal alkali and a metal salt; and the metal is selected from any one or more of copper, iron, magnesium, calcium, titanium, antimony, sodium and potassium.

Preferably, the polycarbonate alloy material includes the following components in parts by weight:
50-65 parts of polycarbonate;
25-35 parts of PET; and
0.3-1.2 parts of a metallic compound.

It has been found in the present invention according to research that a certain amount of PET and a specific metallic compound are added to polycarbonate, so that the metallic compound can promote the reaction between polycarbonate and PET to generate a block copolymer to some extent, which thus effectively improves the melt strength of the material, slows down the crystallization of the PET resin, and reduces the melt cooling rate of the material. Therefore, the molten tubular preform extruded in the extrusion blow molding of the material has high stability, can keep a molten state during the hanging-down process, and has approximate upper and lower diameters, free of rupture, thereby achieving blow molding to prepare large thick-wall packaging container products. Moreover, the crystalline PET can further effectively improve the chemical resistance of the material and thus, ensures the tolerance of the material to medicines and other chemical substances.

Preferably, the metallic compound is selected from any one or more of a metallic titanium oxide and a metallic antimony oxide; and more preferably, the metallic compound is selected from any one or more of metallic antimony oxides.

Preferably, the metallic titanium oxide may be selected from any one or more of TiO, TiO₂, and Ti₂O₃; the metallic antimony oxide may be selected from any one or more of Sb₂O₃, Sb₂O₄, Sb₂O₅, Sb₆O₁₃, and SbO.

Preferably, the polycarbonate has a viscosity average molecular weight of 10,000-40,000. When the molecular weight of the polycarbonate is too low, it is prone to the phenomenon of slender neck (upper and lower diameters are different) during extruding process, resulting in preform rupture; the corrosion resistance of the material is poor. On the contrary, too high molecular weight makes the rotation of the extruder screw confined, thus leading to a difficulty in extrusion processing. More preferably, the polycarbonate has a viscosity average molecular weight of 18,000-35,000; further preferably, the polycarbonate has a viscosity average molecular weight of 25,000-33,000.

The polycarbonate may be selected from one or more of aromatic polycarbonates; the aromatic polycarbonates may be selected from bisphenol A-type polycarbonates.

The PET has an intrinsic viscosity of 0.65-0.9 dl/g. The material will have a poor chemical resistance if the PET has a too low viscosity, while it is difficult to extrude and process the material if the PET has a too high viscosity. Preferably, the PET has an intrinsic viscosity of 0.7-0.88 dl/g. The intrinsic viscosity of the PET is measured by reference to the standard GT/T 1632.5 -08; the time that a 25°C solvent and a PET solution having a concentration of 0.005 g/mL flow out of a capillarity tube, respectively is determined; afterwards, the intrinsic viscosity is calculated according to the measured time and the concentration of the sample solution.

The polycarbonate alloy material of the present invention may further include 2-10 parts of an antistatic agent in part by weight; the antistatic agent is selected from any one or more of carbon nanotubes, and preferably, multi-walled carbon nanotubes having a tube diameter of 1.0-80 nm and a length of 2-70 µm, and more preferably, multi-walled carbon nanotubes having a tube diameter of 20-60 nm and a length of 10-25 µm.

By means of adding a certain amount of carbon nanotubes, the present invention can further enhance the melt strength of the material and improve the stability of the molten tubular preform extruded from the extrusion blow molding process of the material, thereby effectively improving the extrusion blow molding performance of the material and endowing excellent antistatic property to the material.

The polycarbonate alloy material of the present invention may further include 4-8 parts of a flexibilizer in part by weight; the flexibilizer is selected from any one or more of an ethylene-butyl acrylate-glycidyl methacrylate copolymer, an ethylene-octene-glycidyl methacrylate copolymer, a methylmethacrylate-butadiene-styrene copolymer, a methylmethacrylate-acrylic acid copolymer, an ethylene-methyl acrylate copolymer, and a methylmethacrylate-acrylate-silicone copolymer.

The present invention can effectively improve the low-temperature toughness of the material and further enhance the chemical resistance of the material by means of adding a certain amount of a flexibilizer. Preferably, the flexibilizer is a complex of the ethylene-butyl acrylate-glycidyl methacrylate copolymer and the methylmethacrylate-butadiene-styrene copolymer in a weight ratio of (1:2) - (2:1).

According to the requirement of the material property, the polycarbonate alloy material of the present invention further includes 0.01-1 parts of an antioxidant in part by weight. The antioxidant is selected from any one or more of octadecyl-3-(3,5-di-tert-butyl-4-hydroxyphenyl) propionate, tri(nonylphenyl) phosphite, bis(2,4-di-tert-butylphenyl) pentaerythritol diphosphite, β-(3,5-di-tert-butyl-4-hydroxyphenyl)-n-octadecanol propionate, distearylpentaerythritol diphosphite, tetra[methylene(3,5-di-tert-butyl-4-hydroxy-hydrogenated cinnamate)] methane, distearyl thiopropionate, dilauryl thiopropionate, tricosyl thiodipropionate, pentaerythritol-tetra[3-(3,5-di-tert-butyl-4-hydroxyphenyl)] propionate, and β-(3,5-di-tert-butyl-4-hydroxyphenyl)-propionate amide.

The present invention further provides a preparation method of the above polycarbonate alloy material, including the following steps: adding each component to a blender for blending well to obtain a premix according to a proportion, and putting the premix to a twin-screw extruder for melt mixing and extrusion pelleting to prepare the polycarbonate alloy material; the twin-screw extruder has a screw length-diameter (L/D) ratio of (40:1) - (50:1), a screw cylinder temperature of 240-260°C, and a screw speed of 400-500 rpm.

The present invention further provides use of the above polycarbonate alloy material in medicine packaging. Specifically, a medicine packaging container is prepared by extrusion blow molding.

Compared with the prior art, the present invention has the following beneficial effects:
In the present invention, by adding a certain amount of PET and a specific metallic compound to the polycarbonate, the prepared polycarbonate alloy material has excellent chemical resistance, and meanwhile has a high melt strength and a low melt cooling rate and thus, is suitable for the production of large thick-walled packaging container products via extrusion blow molding. Moreover, the present invention provides a novel selection for materials and molding modes in the field of packaging, and can meet the use requirements of medicine packaging containers particularly, thereby further expanding the use of the polycarbonate materials.

### DETAILED DESCRIPTION OF EMBODIMENTS

The present invention will be described in detail with reference to the detailed examples below. The following examples will help those skilled in the art further understand the present invention, but are not construed as limiting the present invention. It should be indicated that those skilled in the art may make further transformations and improvements in the premise of not departing from the inventive concept herein. These all fall within the protection scope of the present invention.

Raw materials used in the examples and comparative examples of the present invention will be described below, but are not limited to these materials:
PC 1: viscosity average molecular weight: 2,8000, PC E-2000F, Mitsubishi, Japanese;
PC 2: viscosity average molecular weight: 2,3000, PC S-3000F, Mitsubishi, Japanese;
PC 3: viscosity average molecular weight: 1,6000, PC H-4000F, Mitsubishi, Japanese;
PC 4: viscosity average molecular weight: 3,5000, PC E-1000F, Mitsubishi, Japanese;
PC 5: viscosity average molecular weight: 40,000, PC K-1000F, Mitsubishi, Japanese;
PET 1: intrinsic viscosity: 0.8 dl/g, PET BG80, Sinopec Yizheng Chemical Fibre Co., Ltd;
PET 2: intrinsic viscosity: 0.65dl/g, PET FG600, Sinopec Yizheng Chemical Fibre Co., Ltd;
polybutylene terephthalate (PBT): PBT GX112, Sinopec Yizheng Chemical Fibre Co., Ltd;
acrylonitrile-butadiene-styrene (ABS) copolymer: ABS PA-757, CHIMEI Cooperation;
metallic antimony oxide 1: Sb₂O₃, Sb₂O₃-99.8, Hunan Huaxing;
metallic antimony oxide 2: Sb₂O₄, Sigma-Aldrich;
metallic antimony oxide 3: Sb₂O₅, Sigma-Aldrich;
metallic titanium oxide: TiO₂, Sigma-Aldrich;
metallic copper oxide: CuO, WSD-T201, Wujiang WSD Copper Industry Technology Co., Ltd;
metallic Fe oxide: Fe₂O₃, HONGWU NEW MATERIAL;
alkali of metal antimony: Sb(OH)₃, Sigma-Aldrich;
salt of metal antimony: SbCl₃, Sigma-Aldrich;
salt of metal sodium: NaCl, Heifei Yingheng Chemical Industry;
salt of metal calcium: CaCl₂, 94% anhydrous powder, Dongxin New Materials;
alkali of metal magnesium: Mg(OH)₂, Sunano-Instruments.Com;
alkali of metal potassium: KOH, Shandong Feishuo Chemical Industry;
antistatic agent 1: multi-walled carbon nanotube having a tube diameter of 30-50 nm and a length of 10-20 µm, CNT106, Beijing Deke Daojin Science And Technology Co, Ltd.;
antistatic agent 2: multi-walled carbon nanotube having a tube diameter of 1.4-8 nm and a length of 10-30 µm, CNT102, Beijing Deke Daojin Science And Technology Co, Ltd.;
antistatic agent 3: single-walled carbon nanotube having a tube diameter of 1.4-2.2 nm and a length of 5-30 µm, OCSIAL;
antistatic agent 4: carbon black, 250G, Imerys;
flexibilizer 1: ethylene-butyl acrylate-glycidyl methacrylate copolymer, commercially available;
flexibilizer 2: methylmethacrylate-butadiene-styrene copolymer, commercially available;
antioxidant: β-(3,5-di-tert-butyl-4-hydroxyphenyl)-n-octadecanol propionate, commercially available.

Preparation methods of the examples and comparative examples:
According to the proportion, each component was added to a blender and blended well to obtain a premix, and the premix was put to a twin-screw extruder for melt mixing and extrusion pelleting to prepare the polycarbonate alloy material. The twin-screw extruder has a screw LID ratio of 45:1, a screw cylinder temperature of 240-260°C, and a screw speed of 500 rpm.

Test methods for related performance:
(1) Test for extrusion blow molding performance: it was tested by an extrusion molding machine from HUATAI Machinery (HT-110, screw diameter: 110 mm, screw LID ratio: 25/1, motor power: 4.5 KW, and maximum motor speed: 1500 m). Extrusion temperature of five stages was set as 280°C, respectively, and screw speed was 80 r/min. The blow molding product is a barrel having a wall thickness of 4 mm, a diameter of 300 mm and a height of 500 mm; air source pressure: 0.7 MPa and clamping force: 500 kn.
   A. Melt temperature: when the preform was extruded stably, the surface temperature of the preform 400 m away from the lower part of the die head was tested (an infrared thermometer). The higher the measured temperature is, the higher the relative yield of the blow molding is.
   B. Hanging-down preform stability: when the preform is observed by naked eyes to hang down to 500 mm, the hanging-down state of the overall preform is as follows: the whole preform has approximate upper and lower diameters, indicating that the melt strength is higher and the blow molding is easier; if the phenomenon of slender neck at the upper part of the tubular preform is more serious, it indicates that the melt strength is lower and blow molding is harder. The hanging-down state of the preform is denoted by "*"; the fewer the "*" is, the more approximate the upper and lower diameters of the whole preform are; the more the "*" is, the more serious the phenomenon of slender neck in the upper preform is; "*****" denotes that the phenomenon of slender neck is too serious such that the preform is ruptured and falls to the ground.
(2) Test for chemical resistance: 3 mm-thickness molded square plate was adjusted for 24 h at 23°C and 50% humidity; 2 ml of toluene was dropped onto the surface thereof; after standing for 10 min, the generation of surface crack was observed; and the evaluation was performed based on the following standards:
   ⊚: no change on the surface appearance;
   ∘: minor crack on the surface;
   △: more cracks on the surface; and
   ×: severe crack or transverse crack on the surface.
(3) Test for antistatic property: the antistatic property of the material was represented by surface resistivity; 3 mm-thickness molded square plate was adjusted for 24 h at 23°C and 50% humidity; the surface resistivity of the square plate was tested in accordance with ASTM D257-93; the material has a better antistatic property only when its surface resistivity ranges from 10⁶ohm/sq to 10⁹ohm/sq.
(4) Test for low-temperature toughness: the blow molded barrel was placed for 24 h, filled with 11 kg of sandstone, and placed for 24 h at -30°C, and then subjected to free falling from a height of 1 m; the test was repeated for three times, and the crack conditions of the bottom surface were observed;
   the evaluation was based on the following standards:
   ⊚: no change on the bottom surface;
   ∘: minor crack on the bottom surface;
   △: more cracks on the bottom surface; and
   ×: severe crack or transverse crack on the bottom surface.

**Table 1 Proportion (in part by weight) of each component in Examples 1-8 and Comparative Examples 1-3, and test results of the related performance**

| | Exa mple 1 | Exa mple 2 | Exa mple 3 | Exa mple 4 | Exa mple 5 | Exa mple 6 | Exa mple 7 | Exa mple 8 | Com parat ive Exa mple 1 | Com parat ive Exa mple 2 | Com parat ive Exa mple 3 |
|---|---|---|---|---|---|---|---|---|---|---|---|
| PC 1 | 60 | 60 | 60 | 60 | 70 | 65 | 55 | 60 | 60 | 60 | 60 |
| PET 1 | 30 | 30 | 30 | 30 | 20 | 25 | 35 | 30 | 30 | 30 | 30 |
| Sb₂O₃ | 0.3 | 1.2 | 2 | 0.1 | 0.3 | | | 0.3 | / | 0.05 | 5 |
| Sb₂O₄ | | | | | | 0.8 | | | | | |
| Sb₂O₅ | | | | | | | 1.5 | | | | |
| Antioxidant | / | / | / | / | / | / | / | 0.1 | / | / | / |
| Melt temperature °C | 255 | 257 | 252 | 245 | 248 | 250 | 248 | 255 | 235 | 238 | 240 |
| Hanging-down preform stability | * | * | ** | ** | ** | * | * | * | **** * | **** * | **** |
| Chemical resistance | ⊚ | ⊚ | ○ | ⊚ | ○ | ⊚ | ⊚ | ⊚ | ○ | ○ | △ |

As can be seen from the above examples and comparative examples, a certain amount of PET and a specific metallic compound were added to the polycarbonate in the present invention, which not only endows excellent chemical resistance to the material, but also can effectively enhance the melt strength of the material and reduce the melt cooling rate. Moreover, the molten hanging-down preform extruded during the extrusion blow molding has high stability and thus, beneficial to extrusion blow molding.

Since no or too little metallic compound was added in Comparative Examples 1/2, the melt cooling rate of the material is fast and the melt strength is low; and the hanging-down preform stability is poor.

Too much metallic compound was added in Comparative Example 3, which, on the contrary, quickens the melt cooling rate and reduces the melt strength, and deteriorates the chemical resistance of the material.

**Table 2 Proportion (in part by weight) of each component in Examples 9-17, and test results of the related performance**

| | Examp le 9 | Examp le 10 | Examp le 11 | Examp le 12 | Examp le 13 | Examp le 14 | Examp le 15 | Examp le 16 | Examp le 17 |
|---|---|---|---|---|---|---|---|---|---|
| PC 1 | 60 | 60 | 60 | 60 | 60 | 60 | 60 | 60 | 60 |
| PET 1 | 30 | 30 | 30 | 30 | 30 | 30 | 30 | 30 | 30 |
| TiO₂ | 0.3 | | | | | | | | |
| CuO | | 0.3 | | | | | | | |
| Fe₂O₃ | | | 0.3 | | | | | | |
| Sb(OH)₃ | | | | 0.3 | | | | | |
| SbCl₃ | | | | | 0.3 | | | | |
| NaCl | | | | | | 0.3 | | | |
| CaCl₂ | | | | | | | 0.3 | | |
| Mg(OH)₂ | | | | | | | | 0.3 | |
| KOH | | | | | | | | | 0.3 |
| Melt temperature °C | 252 | 250 | 245 | 250 | 248 | 245 | 242 | 245 | 240 |
| Hanging-down preform stability | * | ** | * | ** | ** | ** | ** | ** | ** |
| Chemical resistance | ⊚ | ⊚ | ○ | ⊚ | ⊚ | ○ | ⊚ | ⊚ | ⊚ |

By the comparisons among Examples 9-17 and Example 1, the metallic compound is preferably a metallic titanium oxide and a metallic antimony oxide.

**Table 3: Proportion (in part by weight) of each component in Examples 18-22 and Comparative Examples 4-5, and test results of the related performance**

| | Exampl e 18 | Exampl e 19 | Exampl e 20 | Exampl e21 | Exampl e22 | Compar ative Exampl e 4 | Compar ative Exampl e 5 |
|---|---|---|---|---|---|---|---|
| PC 1 | | | | | 60 | 60 | |
| PC2 | 60 | | | | | | |
| PC3 | | 60 | | | | | |
| PC 4 | | | 60 | | | | |
| PC 5 | | | | 60 | | | |
| PET 1 | 30 | 30 | 30 | 30 | | | |
| PET 2 | | | | | 30 | | |
| PBT | | | | | | 30 | |
| ABS copolymer | | | | | | | 30 |
| Sb₂O₃ | 0.3 | 0.3 | 0.3 | 0.3 | 0.3 | 0.3 | 0.3 |
| Melt temperature °C | 252 | 250 | 248 | 245 | 242 | 236 | 230 |
| Hanging-down preform stability | ** | * * * | * | * | ** | ***** | ***** |
| Chemical resistance | ⊚ | ○ | ⊚ | ⊚ | ○ | ⊚ | × |

Since PBT was added in Comparative Example 4, the melt cooling rate of the material is fast and the melt strength is low; and the hanging-down preform stability is poor.

Since the ABS copolymer was added in Comparative Example 5, the material has poor chemical resistance, fast melt cooling rate and low strength; and the hanging-down preform stability is poor.

**Table 4: Proportion (in part by weight) of each component in Examples 23 -28 and Comparative Example 6, and test results of the related performance**

| | Exampl e 23 | Exampl e 24 | Exampl e 25 | Exampl e 26 | Exampl e 27 | Exampl e 28 | Compar ative Exampl e 6 |
|---|---|---|---|---|---|---|---|
| PC 1 | 60 | 60 | 60 | 60 | 60 | 60 | 60 |
| PET 1 | 30 | 30 | 30 | 30 | 30 | 30 | 30 |
| Sb₂O₃ | 0.3 | 0.3 | 0.3 | 0.3 | 0.3 | 0.3 | 0.3 |
| Antistatic agent 1 | 6 | 8 | | | 6 | 6 | |
| Antistatic agent 2 | | | 6 | | | | |
| Antistatic agent 3 | | | | 6 | | | |
| Antistatic agent 4 | | | | | | | 6 |
| Flexibilizer 1 | 3 | 3 | 3 | 3 | 6 | | 3 |
| Flexibilizer 2 | 3 | 3 | 3 | 3 | | 6 | 3 |
| Melt temperature °C | 252 | 250 | 243 | 242 | 251 | 252 | 248 |
| Hanging-down preform stability | * | * | ** | *** | ** | * | ***** |
| Chemical resistance | ⊚ | ⊚ | ⊚ | ⊚ | ⊚ | ⊚ | ⊚ |
| Surface resistivity ohm/sq | 3.2E+9 | 2.6E+8 | 2.8E+8 | 2.5E+8 | 3.3E+9 | 3.3E+9 | 5.1E+15 |
| Test for low-temperature toughness | ⊚ | ⊚ | ○ | ○ | ○ | ○ | × |

As can be seen from Examples 23-28, a certain amount of the antistatic agent carbon nanotubes and the flexibilizer may be further added in the present invention, which effectively improves the antistatic property and low-temperature toughness of the material, ensures the chemical resistance of the material, and furthermore endows lower melt cooling rate and higher melt strength to the material such that the material may achieve extrusion blow molding well and meets the use requirement of medicine packaging containers.

Carbon black was used in Comparative Example 6, which achieves no good improvement effect on the antistatic property of the material. Moreover, the melt strength of the material is low, the hanging-down preform stability is poor; meanwhile, the low-temperature toughness of the material is deteriorated.

## Claims

1. A polycarbonate alloy material, comprising the following components in parts by weight:
40-70 parts of polycarbonate;
20-40 parts of polyethylene terephthalate; and
0.1-2 parts of a metallic compound;
wherein the metallic compound is selected from one or more of a metal oxide, a metal alkali and a metal salt; and the metal is selected from one or more of copper, iron, magnesium, calcium, titanium, antimony, sodium and potassium.

2. The polycarbonate alloy material according to claim 1, comprising the following components in parts by weight:
50-65 parts of polycarbonate;
25-35 parts of PET; and
0.3-1.2 parts of a metallic compound.

3. The polycarbonate alloy material according to claim 1, wherein the metallic compound is selected from one or more of a metallic titanium oxide and a metallic antimony oxide; and preferably, the metallic compound is selected from one or more of metallic antimony oxides.

4. The polycarbonate alloy material according to claim 3, wherein the metallic titanium oxide is selected from one or more of TiO, TiO₂, and Ti₂O₃; the metallic antimony oxide is selected from one or more of Sb₂O₃, Sb₂O₄, Sb₂O₅, Sb₆O₁₃, and SbO.

5. The polycarbonate alloy material according to claim 1, wherein the polycarbonate has a viscosity average molecular weight of 10,000-40,000, preferably 18,000-35,000, and more preferably 25,000-33,000; the PET has an intrinsic viscosity of 0.65-0.9 dl/g, and preferably 0.7-0.88 dl/g.

6. The polycarbonate alloy material according to claim 1, further comprising 2-10 parts of an antistatic agent in parts by weight, wherein the antistatic agent is selected from one or more of carbon nanotubes, preferably the antistatic agent is selected from one or more of multi-walled carbon nanotubes having a tube diameter of 1.0-80 nm and a length of 2-70 µm, and more preferably, the antistatic agent is selected from one or more of multi-walled carbon nanotubes having a tube diameter of 20-60 nm and a length of 10-25 µm.

7. The polycarbonate alloy material according to claim 1, further comprising 4-8 parts of a flexibilizer in parts by weight, wherein the flexibilizer is selected from one or more of an ethylene-butyl acrylate-glycidyl methacrylate copolymer, an ethylene-octene-glycidyl methacrylate copolymer, a methyl methacrylate-butadiene-styrene copolymer, a methylmethacrylate-acrylic acid copolymer, an ethylene-methyl acrylate copolymer, and a methylmethacrylate-acrylate-silicone copolymer; and preferably the flexibilizer is a complex of the ethylene-butyl acrylate-glycidyl methacrylate copolymer and the methylmethacrylate-butadiene-styrene copolymer in a weight ratio of (1:2) - (2:1).

8. The polycarbonate alloy material according to claim 1, further comprising 0.01-1 parts of an antioxidant in parts by weight, wherein the antioxidant is selected from one or more of octadecyl-3-(3,5-di-tert-butyl-4-hydroxyphenyl) propionate, tri(nonylphenyl) phosphite, bis(2,4-di-tert-butylphenyl) pentaerythritol diphosphite, β-(3,5-di-tert-butyl-4-hydroxyphenyl)-n-octadecanol propionate, distearylpentaerythritol diphosphite, tetra[methylene(3,5-di-tert-butyl-4-hydroxy-hydrogenated cinnamate)] methane, distearyl thiopropionate, dilauryl thiopropionate, tricosyl thiodipropionate, pentaerythritol-tetra[3-(3,5-di-tert-butyl-4-hydroxyphenyl)] propionate, and β-(3,5-di-tert-butyl-4-hydroxyphenyl)-propionate amide.

9. A method for preparing the polycarbonate alloy material according to any one of claims 1-8, comprising the following steps: adding each component into a blender according to a proportion for blending well to obtain a premix, and putting the premix into a twin-screw extruder for melt mixing and extrusion pelleting to prepare the polycarbonate alloy material, wherein the twin-screw extruder has a screw length-diameter ratio of (40:1) - (50:1), a screw cylinder temperature of 240-260°C, and a screw speed of 400-500 rpm.

10. Use of the polycarbonate alloy material according to any one of claims 1-8 in the field of medicine packaging.
